# EUROPÄISCHE PATENTSCHRIFT

(11) **EP 3 707 817 B1**
(45) Veröffentlichungstag und Bekanntmachung des Hinweises auf die Patenterteilung: **29.12.2021**
(21) Anmeldenummer: 18795922.6
(22) Anmeldetag: 28.09.2018
(51) Int. Cl.: H02P 6/15, H02P 1/04

(54) **VERFAHREN ZUM STARTEN UND BETREIBEN EINES BLDC-MOTORS UND BLDC-MOTOR**
METHOD FOR STARTING AND OPERATING A BLDC MOTOR AND BLDC MOTOR
PROCÉDÉ DE DÉMARRAGE ET DE FONCTIONNEMENT D'UN MOTEUR SANS BALAIS ET MOTEUR SANS BALAIS

(30) Priorität: 12.10.2017 DE 102017009512
(43) Veröffentlichungstag der Anmeldung: 16.09.2020
(73) Patentinhaber: NIDEC driveXpert GmbH, 98673 Auengrund (DE)
(72) Erfinder: GREINER, Martin, 99086 Erfurt (DE)
(74) Vertreter: Weihrauch, Frank
(86) Internationale Anmeldenummer: PCT/DE2018/000276
(87) Internationale Veröffentlichungsnummer: WO 2019/072327

(56) Entgegenhaltungen:
- DE-A1-102014 107 949

## Beschreibung

Die Erfindung betrifft eine Anordnung und ein Verfahren zum Starten und Betreiben eines bürstenlosen Gleichstrommotors, auch als Brushless Direct Current Motor oder verkürzt als BLDC-Motor bezeichnet.

Der grundlegende Aufbau eines gattungsgemäßen BLDC-Motors ist aus dem Stand der Technik bekannt und umfasst einen feststehenden Stator, welcher aus einer Mehrzahl an Statorspulen gebildet wird, sowie einen beweglichen Rotor, der meist aus Permanentmagneten gebildet wird. Zur Erzeugung eines magnetischen Drehfeldes werden die Statorspulen von einer elektronischen Schaltung zeitlich versetzt angesteuert. Aufgrund des erzeugten Drehfeldes ist somit ein Drehmoment des permanent erregten Rotors bewirkbar.

Zur Bereitstellung des Drehmoments des Rotors ist es erforderlich, ein drehendes Statormagnetfeld bereitzustellen und hierfür eine Kommutierung und somit eine Strombeaufschlagung und vorzugsweise Umpolung der Statorspulen vorzunehmen. Die Kommutierung ist dabei gleichbedeutend mit dem Umschalten in einen nächsten Motorzustand. Hierzu sind verschiedenartige Vorgehensweisen wie insbesondere eine Blockkommutierung und eine Sinus-Kommutierung bekannt.

Des Weiteren wird hinsichtlich der Kommutierung zwischen einer sensorgesteuerten und einer sensorlosen Kommutierung unterschieden. Bei einer sensorgesteuerten Kommutierung wird mittels eines Sensors eine Rotorposition detektiert und davon abgeleitet die Kommutierung gesteuert.

Aus dem Stand der Technik bekannte BLDC-Motoren sind häufig als Dreiphasen-systeme ausgeführt, wobei jedoch in Abhängigkeit der Einsatzerfordernisse auch eine höhere oder geringere Phasenanzahl zur Anwendung kommen kann.

Ein gattungsgemäßer BLDC-Motor ist beispielsweise aus der Druckschrift DE 197 43 314 A1 bekannt. Der hierbei beschriebene Motor weist einen Stator mit mehre-ren Statormagnetpolen und einer Wicklung zum Erzeugen eines rotierenden Feldes in den Statormagnetpolen sowie einen Rotor mit einer Drehachse und Feld-Permanentmagneten, die sich in Bezug auf die Statormagnetpole drehen, auf. Zudem ist eine Regelschaltung zum Erfassen der Position der Magnetpole des Feld-Permanentmagneten in Bezug auf den Stator und zur positionsabhängigen Stromversorgung der Wicklung vorgesehen.

Die Druckschrift EP 2 026 461 A2 beschreibt ein Verfahren zur sensorlosen Regelung einer insbesondere dreiphasigen Drehstrommaschine. Hierbei ist vorgesehen, dass zumindest während der Zeit der zur Rotorpositionsauswertung herangezogenen Umrichterschalterstellungen die Stromführung in zwei Phasen erfolgt und mindestens eine Phase stromlos ist. Eine Information bezüglich des Rotor- bzw. Flusswinkels wird aus der Subtraktion von zwei während unterschiedlicher zeitnah hintereinander auftretender Umrichterschalterstellungen gültigen Spannungsgleichungen ermittelt, wobei die beiden unterschiedlichen Umrichterschalterstellungen dieselbe stromlose Phase aufweisen.

Zudem ist aus der Druckschrift DE 103 08 859 A1 ein Verfahren zur Ansteuerung eines BLDC-Motors auf Grundlage von fortlaufend aktualisierten Kommutierungszeitpunkten bekannt. Hierbei wird die Zeitdifferenz zwischen zwei unmittelbar aufeinanderfolgenden Nulldurchgängen, welche die Punkte der Richtungsumkehr der induzierten Spannung bezeichnen, in der jeweils nicht bestromten Motorspule zweier Motorphasen gemessen. Die Kommutierung erfolgt nach Ablauf der Hälfte dieser Zeitdifferenz, gerechnet vom Nulldurchgang der gemessenen zweiten Motorphase, wobei diese Vorgehensweise für alle folgenden Phasen kontinuierlich fortgesetzt wird.

Ferner beschreibt DE 10 2014 107 949 A1 ein Verfahren zur Erkennung des Nulldurchgangs eines Phasenstroms in einer Spule eines BLDC-Motors, um dann den Phasenstrom zu unterbrechen und die rückwirkende elektromotorische Kraft (Back-EMF) für die weitere Steuerung zu analysieren.

Die Aufgabe der Erfindung ist es, ein Verfahren zum Starten und Betreiben eines BLDC-Motors bereitzustellen, welches sowohl in der Startphase als auch im Dauerbetrieb stabil und geräuscharm arbeitet, welches ohne vorherige Kenntnis der Rotorposition sowie ohne Verwendung von Positionssensoren durchführbar ist, welches sowohl bei einem stehenden als auch in Bewegung befindlichen Rotor durchführbar und welches zudem kostengünstig anwendbar ist.

Zudem ist es die Aufgabe der Erfindung, einen BLDC-Motor bereitzustellen, welcher mit einem solchen Verfahren betreibbar ist.

Die Aufgabe wird in Bezug auf das Verfahren durch die im Patentanspruch 1 aufgeführten Merkmale gelöst. In Bezug auf den BLDC-Motor wird die Aufgabe durch die im Patentanspruch 2 aufgeführten Merkmale gelöst.

Ein erfindungsgemäßes Verfahren zum Starten und Betreiben eines BLDC-Motors ist mittels eines BLDC-Motors durchführbar, der einen Rotor, einen Stator sowie eine Steuerungs- und Auswertungseinheit aufweist. Als BLDC-Motor im Sinne der vorliegenden Erfindung wird ein bürstenloser Gleichstrommotor verstanden.

Der Rotor weist zumindest einen Erregermagneten auf, der vorzugsweise als Permanentmagnet ausgebildet ist. Der Stator weist zumindest drei Statorspulen auf. Die Statorspulen können insbesondere als Stern oder Dreieck verschaltet sein. Jede der mindestens drei Statorspulen ist mit jeweils einem Phasenstrom beaufschlagbar, wobei mittels der Statorspulen ein drehendes Statormagnetfeld erzeugbar ist.

Die Steuerungs- und Auswertungseinheit des BLDC-Motors wird insbesondere zur Regelung der elektrischen Kenngrößen sowie zur Analyse der resultierenden Signalverläufe genutzt. Vorzugsweise kann diese mit einem Ausgabegerät wie beispielsweise einem PC oder Laptop gekoppelt werden. Dabei führt die Steuerungs- und Auswertungseinheit eine Abfolge von Verfahrensschritten durch, welche durch das erfindungsgemäße Verfahren bestimmt sind.

Das erfindungsgemäße Verfahren zum Starten und Betreiben eines BLDC-Motors weist die nachfolgenden Verfahrensschritte auf:
a) Durchführung einer Initialisierungsphase, wobei das Definieren einer Startzeit, das Definieren eines initialen Startfeldwinkels des Statormagnetfelds und das Definieren einer Winkelanstiegsgeschwindigkeit erfolgt,
b) Durchführung eines Teilzyklus, hierbei
   b1) Durchführung einer Anstiegsphase,
      wobei die Erhöhung eines Momentanfeldwinkels mit der Winkelanstiegsgeschwindigkeit bis zum Erreichen eines Endfeldwinkels, welcher einen Startfeldwinkel um 60° übersteigt, erfolgt,
      wobei die Erhöhung des Momentanfeldwinkels durch eine Veränderung einer Spannungsbeaufschlagung der Statorspulen erfolgt,
      wobei der Startfeldwinkel bei einer erstmaligen Durchführung der Anstiegsphase dem initialen Startfeldwinkel und bei wiederholter Durchführung einem Endfeldwinkel einer vorhergehenden Anstiegsphase entspricht,
   b2) Durchführung einer Analysephase,
      wobei eine Konstanthaltung des Momentanfeldwinkels durch eine Konstanthaltung der Spannungsbeaufschlagung der Statorspulen erfolgt,
      wobei eine fortlaufende Erfassung einer Stromdifferenz zwischen zwei Phasenströmen gleicher Fließrichtung erfolgt,
      wobei eine Auswertung der erfassten Stromdifferenz auf ein Vorliegen eines Stromauges mittels der Steuerungs- und Auswertungseinheit erfolgt,
      wobei sich das Stromauge zwischen dem Zeitpunkt eines ersten Auftretens einer Stromdifferenz von 0 zwischen den beiden Phasenströmen gleicher Fließrichtung und dem Zeitpunkt eines zweiten Auftretens einer Stromdifferenz von 0 zwischen den beiden Phasenströmen gleicher Fließrichtung ausbildet,
      wobei bei Detektierung eines Stromauges eine sofortige Kommutierung erfolgt, oder wobei ohne Detektierung eines Stromauges eine Kommutierung nach Ablauf eines vorbestimmbaren Zeitintervalls erfolgt,
      wobei nach Durchführung der Kommutierung eine Beendigung der Analysephase erfolgt
c) Wiederholte Durchführung des Teilzyklus,
   wobei der Teilzyklus so oft wiederholt wird, bis der Endfeldwinkel auf einen Wert von 360° angestiegen ist,
   wobei die Teilzyklen zusammen einen Gesamtzyklus ausbilden,
d) Wiederholte Durchführung des Gesamtzyklus.

In Verfahrensschritt a) wird zunächst eine Initialisierungsphase durchgeführt, wobei eine Startzeit, ein initialer Startfeldwinkel des Statormagnetfeldes sowie eine Winkelanstiegsgeschwindigkeit definiert werden. Die Startzeit beschreibt dabei den Zeitpunkt, an welchem die erste Anstiegsphase des ersten Teilzyklus' beginnt. Somit ist die Startzeit, welche auch als initiale Motorzustands-Zeit bezeichnet werden kann, lediglich einmalig zu definieren. Die Winkelanstiegsgeschwindigkeit ist die Winkelgeschwindigkeit der Änderung des Magnetfeldwinkels. Sie beschreibt, innerhalb welcher Zeitdauer der Momentanfeldwinkel auf einen Endfeldwinkel, welcher den Startfeldwinkel um 60° übersteigt, erhöht wird.

Nach Durchführung der Initialisierungsphase erfolgt in Verfahrensschritt b) die Durchführung eines Teilzyklus, welcher in eine Anstiegsphase b1) und eine nachfolgende Analysephase b2) unterteilt ist.

Wurde der initiale Startfeldwinkel des Statorfeldes in der Initialisierungsphase als 0°-Winkelstellung definiert, so steigt der Momentanfeldwinkel innerhalb der Anstiegsphase des ersten Teilzyklus' von einem Startfeldwinkel von 0° auf einen Endfeldwinkel von 60° an. Der Startwinkel entspricht bei erstmaliger Durchführung des Teilzyklus' somit dem initialen Startfeldwinkel. Die Erhöhung des Momentanfeldwinkels um 60° wird dabei durch eine Veränderung der Spannungsbeaufschlagung der Statorspulen bewirkt, welche einen Drehmoment des Rotors bewirkt.

Der Durchführung des Verfahrensschritts b1), also der Anstiegsphase, liegt die Überlegung zu Grunde, dass durch die Änderung des Momentanfeldwinkels der Bewegungszustand des Rotors beeinflusst wird. Dies kann beispielsweise das Bewirken einer Drehbewegung bei einem zuvor stehenden Rotor oder eine Beschleunigung eines zuvor sich bereits bewegenden Rotors sein.

In der nachfolgenden Analysephase b2) wird der Momentanfeldwinkel infolge einer Konstanthaltung der Spannungsbeaufschlagung der Statorspulen konstant gehalten. Im ersten Teilzyklus erfolgt die Konstanthaltung somit bei einem Momentanfeldwinkel von 60°. Während der Analysephase erfolgt die fortlaufende Erfassung einer Stromdifferenz zwischen zwei Phasenströmen gleicher Fließrichtung. Im Falle der Verwendung von drei Statorspulen werden somit die an zwei der Statorspulen fließenden Phasenströme erfasst, während der Phasenstrom der jeweils dritten Statorspule nicht in die Analyse einfließt. Die zwei erfassten Phasenströme weisen erfindungsgemäß die gleiche Fließrichtung und somit ein übereinstimmendes Vorzeichen auf, während der nicht berücksichtigte dritte Phasenstrom eine entgegengesetzte Fließrichtung aufweist.

Die erfasste Stromdifferenz wird mittels der Steuerungs- und Auswertungseinheit auf ein Vorliegen eines Stromauges untersucht. Als Stromauge im Sinne der vorliegenden Erfindung wird der Bereich verstanden, welcher sich zwischen dem Zeitpunkt eines ersten Auftretens einer Stromdifferenz von 0 zwischen den beiden Phasenströmen gleicher Fließrichtung und dem Zeitpunkt eines zweiten Auftretens einer Stromdifferenz von 0 zwischen den beiden Phasenströmen gleicher Fließrichtung ausbildet. Dies bedeutet, dass der zunächst niedrigere Phasenstrom ansteigt und der zunächst höhere Phasenstrom abfällt, so dass die Differenz der Phasenströme sinkt, bis beide Phasenströme gleich sind. Dies ist der Zeitpunkt des ersten Auftretens einer Stromdifferenz von Null. Unmittelbar nach dem Zeitpunkt des ersten Auftretens einer Stromdifferenz von Null ist der zunächst niedrigere Phasenstrom nun höher als der zunächst höhere Phasenstrom. Es folgen dann ein Abfallen des zunächst niedrigeren Phasenstroms und ein Ansteigen des zunächst höreren Phasenstroms, so dass die Differenz der Phasenströme wieder sinkt, bis beide Phasenströme wieder gleich sind. Dies ist der Zeitpunkt des zweiten Auftretens einer Stromdifferenz von 0.

Die Bezeichnung als Stromauge beruht auf der typischen Form bei grafischer Darstellung des Verlaufs dieser beiden Ströme.

Erfindungsgemäß erfolgt die Drehung des Statormagnetfeldes nicht synchron zu jener des Rotorfeldes, da das Statormagnetfeld in jedem Teilzyklus zunächst während der Anstiegsphase schneller bewegt wird und in der dann anschließenden Analysephase konstant gehalten wird. Somit wird eine schnellere Änderung der Phasenströme erzwungen, welche zur Ausbildung des Stromauges führt.

Ist ein Stromauge detektierbar, so erfolgt eine sofortige Kommutierung. Die Kommutierung bewirkt den Wechsel in einen nächsten Motorzustand. Für den Fall, dass nach Ablauf eines vorbestimmbaren Zeitintervalls kein Stromauge detektiert wurde, erfolgt ebenfalls eine Kommutierung und somit ein Wechsel in den nächsten Motorzustand,

Nach der Durchführung der Kommutierung ist die Analysephase abgeschlossen und somit der Teilzyklus b) beendet.

Im Anschluss daran erfolgt gemäß dem erfindungsgemäßen Verfahrensschritt c) eine wiederholte Durchführung des Teilzyklus b) bis der Endfeldwinkel auf einen Wert von 360° angestiegen ist, zur Ausbildung eines Gesamtzyklus. Das Ansteigen des Endfeldwinkels auf einen Wert von 360° bedeutet eine vollständige Umdrehung des Statormagnetfeldes.

Da der Startfeldwinkel bei einer wiederholten Durchführung des Teilzyklus dem Endfeldwinkel der vorhergehenden Anstiegsphase entspricht, würde der Momentanfeldwinkel bei der ersten Wiederholung und somit der zweiten Durchführung des Teilzyklus, entsprechend der in der Initialisierungsphase vorgenommenen Definition, innerhalb der Anstiegsphase von einem Startfeldwinkel von 60° auf einen Endfeldwinkel von 120° ansteigen. Die nachfolgende Analysephase würde unter Konstanthaltung des Momentanfeldwinkels auf einem Wert von 120° entsprechend der zuvor beschriebenen Vorgehensweise durchgeführt werden, wobei sich nun das analysierte Statorspulenpaar und somit die an der Bildung des Stromauges beteilgten Phasenströme ändern.

Diese Teilzyklen werden wiederholt, bis der Endfeldwinkel einen Wert von 360° annimmt. Sämtliche dabei durchgeführte Teilzyklen bilden einen Gesamtzyklus aus. Wenn der Stator des BLDC-Motor drei Statorspulen aufweist und in sechs Motorstatus arbeitet, wird ein Gesamtzyklus zur sechs Teilzyklen ausgebildet.

In Verfahrensschritt d) wird nun der Gesamtzyklus ebenfalls wiederholt durchgeführt. Der in einem Gesamtzyklus zuletzt angenommene Endfeldwinkel von 360° stellt dabei zugleich den Startfeldwinkel des nachfolgenden Gesamtzyklus von 0° dar, so dass kein erneuter initialer Startfeldwinkel zu definieren ist. Der Verfahrensschritt d) kann beispielsweise beliebig oft durchgeführt werden.

Es ist aber auch möglich, dass der Verfahrensschritt d) nur solange wiederholt wird, bis eine vorbestimmbare Motordrehzahl erreicht wird. Nachfolgend kann dann von der Steuerungs- und Auswertungseinheit auf ein anderes Motorsteuerungsverfahren umgeschaltet werden, In dieser Variante wird das erfindungsgemäße Verfahren lediglich für die Startphase verwendet. Das nachfolgende Motorsteuerungsverfahren muss dann nicht die Fähigkeit aufweisen, den Motor bei unbekannter Rotorposition oder unbekanntem Bewegungszustand starten zu können.

Die Überwachung der Motordrehzahl kann ebenfalls mittels der Steuerungs- und Auswertungseinheit erfolgen.

Das erfindungsgemäße Verfahren zum Starten und Betreiben eines BLDC-Motors weist insbesondere die nachfolgenden Vorteile auf.

Ein wesentlicher Vorteil besteht darin, dass der Startvorgang ohne eine vorherige Kenntnis der Position des Rotors begonnen werden kann.

Damit im Zusammenhang stehend ist es als weiterer besonderer Vorteil zudem möglich, das Verfahren bei einem unbekannten Rotorbewegungszustand zu beginnen, so dass der Rotor sowohl stillstehen kann, als auch sich vorwärts oder rückwärts drehen kann (catch on fly). Vorteilhafterweise eignet sich das erfindungsgemäße Verfahren somit insbesondere für Lüftermotoren an Fahrzeugkühlern, welche durch den Fahrtwind nicht vordefinierbare Bewegungszustände oder Positionen einnehmen können und trotzdem jederzeit startbar sein müssen.

Erfindungsgemäß muss der BLDC-Motor zur Verfahrensdurchführung zudem keinen Positionssensor aufweisen, so dass eine konstruktive Vereinfachung erzielt werden kann. Gegenüber anderen aus dem Stand der Technik bekannten Verfahren zur sensorlosen Ansteuerung eines BLDC-Motors ist zur Kommutierung zudem keine Mindestdrehzahl erforderlich.

Letztlich muss somit vor dem Start des Motors keine Zeit zur Ausrichtung oder Messung der Rotorposition aufgebracht werden, so dass der Startvorgang erheblich verkürzt werden kann.

Weiterhin besteht ein Vorteil darin, dass der BLDC-Motor bei Anwendung des vorliegenden Verfahrens sowohl während des Starts als auch während des fortlaufenden Betriebs besonders geräuscharm arbeitet. Auch wegen dieses Vorteils ist das Verfahren insbesondere für Lüftermotoren an Fahrzeugkühlern besonders geeignet.

Zudem ist das Verfahren besonders robust gegen Schwankungen der Last- oder Versorgungsspannung, so dass ein Oszillationszustand zuverlässig vermieden wird.

Die vorliegende Erfindung umfasst zudem einen BLDC-Motor, mittels welchem das erfindungsgemäße Verfahren durchführbar ist. Der BLDC-Motor weist einen Rotor, einen Stator sowie eine Steuerungs- und Auswertungseinheit auf. Der Rotor weist zumindest einen Permanentmagneten und der Stator zumindest drei Statorspulen auf, wobei jede der mindestens drei Statorspulen mit jeweils einem Phasenstrom beaufschlagbar ist und wobei mittels der Statorspulen ein drehendes Statormagnetfeld erzeugbar ist.

Mittels der Steuerungs- und Auswertungseinheit sowie mittels der drei Statorspulen sind eine Initialisierungsphase, ein Teilzyklus sowie ein aus mehreren Teilzyklen gebildeter Gesamtzyklus durchführbar. Ferner ist der Gesamtzyklus wiederholt durchführbar. Es gelten die Erläuterungen zum Verfahrensanspruch (Patentanspruch 1) für den BLDC-Motor in gleicher Weise.

Vom Gegenstand des erfindungsgemäßen Verfahrens und des erfindungsgemäßen BLDC-Motors und vom Schutzgegenstand der Anmeldung sind auch die Varianten erfasst, in denen der Stator mehr als drei Statorspulen aufweist. Die Werte für die Endfeldwinkel, die Anzahl der Teilzyklen und die für die Detektierung eines Stromauges beteiligten Phasenströme gelten dann in der sich ergebenden entsprechenden Weise.

Die Erfindung wird als Ausführungsbeispiel anhand von
- Fig. 1: Prinzipdarstellung eines BLDC-Motors,
- Fig.2: Signalverlauf während des Starts eines BLDC-Motors,
- Fig.3: Tabelle
näher erläutert.

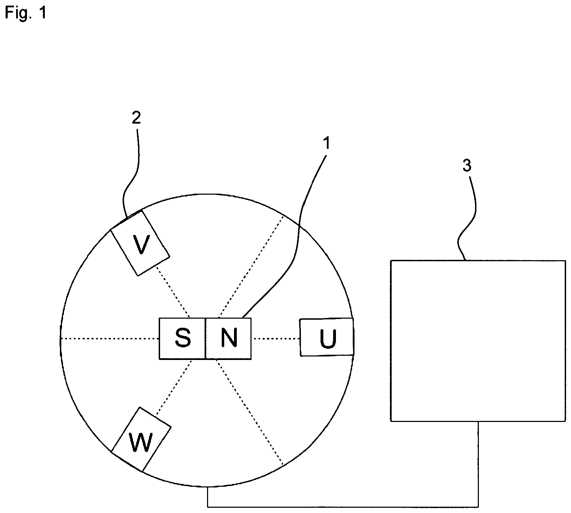

In Fig. 1 ist ein Ausführungsbeispiel des BLDC-Motors dargestellt, welcher mit Hilfe des erfindungsgemäßen Verfahrens startbar und betreibbar ist. Hierbei sind lediglich die zur Durchführung des erfindungsgemäßen Verfahrens benötigten Bestandteile des BLDC-Motors dargestellt. Insbesondere die Spannungsversorgung wird hierbei nicht dargestellt.

Der BLDC-Motor weist einen Rotor 1, einen Stator 2 sowie eine Steuerungs- und Auswertungseinheit 3 auf. Der Rotor 1 weist zumindest einen Permanentmagneten auf, dessen magnetische Pole mit S und N für Süd- und Nordpol gekennzeichnet sind. Der Stator 2 weist im vorliegenden Ausführungsbeispiel drei jeweils um 120° versetzte Statorspulen auf, wobei die den Statorspulen zugeordneten Phasen in der Fig. 1 mit U, V und W bezeichnet sind.

Werden die räumlich um 120° versetzten Phasen durch zeitlich um 120° versetzte sinusförmige Phasenströme gleicher Amplitude beaufschlagt, so entsteht ein mit konstanter Geschwindigkeit umlaufendes Statormagnetfeld. Das maximale Drehmoments des Rotors wird dann erreicht, wenn das Statormagnetfeld in einem Winkel von 90° zum Rotor steht.

Ferner wird ein Ausführungsbeispiel eines erfindungsgemäßen Verfahrens gezeigt.

Hierbei zeigt Fig. 1 den Prinzipaufbau eines für das Verfahren verwandten BLDC-Motors.

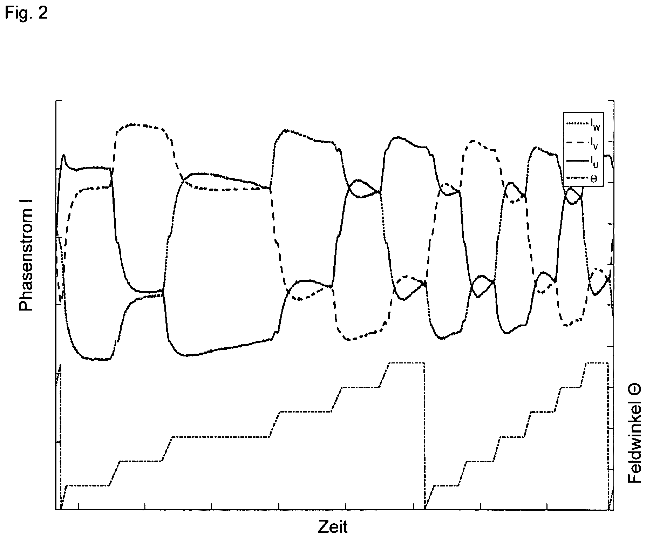

Fig. 2 zeigt einen typischen Signalverlauf bei Durchführung des Verfahrens bei einem BLDC-Motors während der Startphase. Dargestellt sind die drei Phasenströme I (IW, IV, IU) sowie der zugehörige Momentanfeldwinkel (Θ) im Zeitverlauf. Einer Anstiegsphase entspricht ein ansteigender Abschnitt des Momentanfeldwinkels (Θ) und einer Analysephase eine konstanter Abschnitt des Momentanfeldwinkels (Θ). Bei seinem Maximalwert entspricht der Momentanfeldwinkel (Θ) 360°. Dies entspricht dem Ende eines Gesamtzyklus. Wie Fig. 2 weiter zeigt, ist mit Beginn des darauf folgenden weiteren Gesamtzyklus ist der Momentanfeldwinkel (Θ) wieder mit 0° eingetragen.

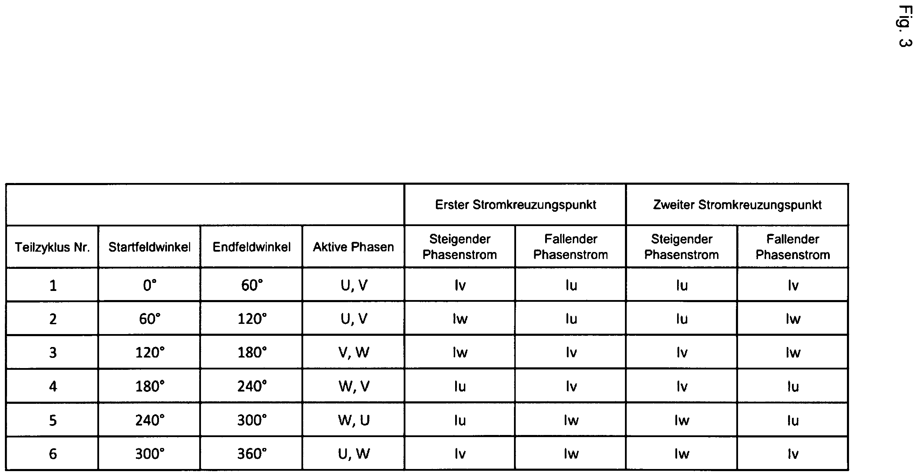

Fig. 3 zeigt eine zugehörige Tabelle, welche einen aus sechs Teilzyklen bestehenden Gesamtzyklus des erfindungsgemäßen Verfahrens beinhaltet, wobei die in den einzelnen Teilzyklen aktiven Phasen sowie die an der Bildung des Stromauges beteiligten Phasenströme hinterlegt sind. Die nach Abschluss eines jeweiligen Teilzyklus eingenommene Position des Rotors ist anhand der in Fig. 1 vorhandenen, um 60° versetzten Hilfslinien dargestellt.

Vor dem Beginn des ersten Teilzyklus wird zunächst eine Initialisierungsphase durchgeführt, in welcher eine Startzeit, ein initialer Startfeldwinkel des Statormagnetfeldes sowie eine Winkelanstiegsgeschwindigkeit definiert werden. Der initiale Startfeldwinkel ist im Ausführungsbeispiel auf einen Wert von 0° festgelegt, welches der Feldrichtung der Phase U entspricht. Phase V ist definitionsgemäß entsprechend um 120°, Phase W um 240° versetzt.

Jeder der wiederholt durchgeführten Teilzyklen ist in eine Anstiegsphase und eine Analysephase unterteilt.

In der Anstiegsphase des ersten Teilzyklus wird der Momentanfeldwinkel mit der zuvor definierten Winkelanstiegsgeschwindigkeit von einem Startfeldwinkel von 0° auf einen Endfeldwinkel von 60° erhöht. Im ersten Teilzyklus entspricht der Startfeldwinkel somit dem initialen Startfeldwinkel, während in den folgenden Teilzyklen der vorherigen Endfeldwinkel als neuer Startfeldwinkel vereinbart wird. Die Erhöhung des Momentanfeldwinkels wird dabei durch eine Änderung der Spannungsbeaufschlagung der Statorspulen bewirkt, welche zudem eine Drehbewegung des Rotors bewirkt. Als aktive Phasen liegen im ersten Teilzyklus die Phasen U und V vor, während die Phase W auf einem Wert von null verbleibt.

In der anschließenden Analysephase des ersten Teilzyklus wird der Momentanfeldwinkel auf einem Wert von 60° konstant gehalten, so dass sich die Phasenströme nur noch aufgrund von Positionsänderungen des Rotors ändern. Dabei erfolgt eine forlaufende Erfassung der Stromdifferenz zwischen den zwei Phasenströmen gleicher Fließrichtung. Im ersten Teilzyklus entspricht dies den Phasenströmen IU und IV. Die erfasste Stromdifferenz wird auf ein Vorliegen eines Stromauges, welches sich zwischen einem ersten und einem zweiten Stromkreuzungspunkt ausbildet, überwacht. Der erste Stromkreuzungspunkt beschreibt hierbei den Zeitpunkt eines ersten Auftretens einer Stromdifferenz von 0 zwischen den Phasenströmen IU und IV, während der zweite Stromkreuzungspunkt den Zeitpunkt eines zweiten Auftretens einer Stromdifferenz von 0 zwischen den Phasenströmen IU und IV bezeichnet.

Im ersten Stromkreuzungspunkt liegt der Phasenstrom IV als steigender Phasenstrom und der Phasenstrom IU als fallender Phasenstrom vor. Im zweiten Stromkreuzungspunkt verhält es sich umgekehrt, so dass der Phasenstrom IU steigt und der Phasenstrom IV fällt.

Für den Fall, dass ein Stromauge detektiert werden konnte, erfolgt eine sofortige Kommutierung, welche den Wechsel in einen nächsten Motorzustand einleitet. Falls nach Ablauf eines vorbestimmbaren Zeitintervalls kein Stromauge detektiert wurde, erfolgt ebenfalls eine Kommutierung und somit ein Wechsel in den nächsten Motorzustand.

Im zweiten Teilzyklus erfolgt in der Anstiegsphase eine Erhöhung des Momentanfeldwinkels von 60° auf 120°. In der Analysephase wird der Momentanfeldwinkel auf dem Wert des erreichten Endfeldwinkels von 120° konstant gehalten. Als aktive Phasen liegen hierbei erneut U sowie V vor. Die an der Bildung des Stromauges beteiligten Phasenströme sind hierbei den Phasen W und U zuzuordnen, wobei im ersten Stromkreuzungspunkt der Phasenstrom IW steigt und der Phasenstrom IU fällt. Zur Schließung des Stromauges steigt der Phasenstrom IU im zweiten Stromkreuzungspunkt und der Phasenstrom IW fällt.

Im dritten Teilzyklus erfolgt in der Anstiegsphase eine Erhöhung des Momentanfeldwinkels von 120° auf 180°. In der Analysephase wird der Momentanfeldwinkel auf dem Wert des erreichten Endfeldwinkels von 180° konstant gehalten. Als aktive Phasen liegen hierbei die Phasen W und V vor. Die an der Bildung des Stromauges beteiligten Phasenströme sind hierbei den Phasen W und V zuzuordnen, wobei im ersten Stromkreuzungspunkt der Phasenstrom IW steigt und der Phasenstrom IV fällt. Zur Schließung des Stromauges steigt der Phasenstrom IV im zweiten Stromkreuzungspunkt und der Phasenstrom IW fällt.

Im vierten Teilzyklus erfolgt in der Anstiegsphase eine Erhöhung des Momentanfeldwinkels von 180° auf 240°. In der Analysephase wird der Momentanfeldwinkel auf dem Wert des erreichten Endfeldwinkels von 240° konstant gehalten. Als aktive Phasen liegen hierbei die Phasen W und V vor. Die an der Bildung des Stromauges beteiligten Ströme sind hierbei den Phasen U und V zuzuordnen, wobei im ersten Stromkreuzungspunkt der Phasenstrom IU steigt und der Phasenstrom IV fällt. Zur Schließung des Stromauges steigt der Phasenstrom IV im zweiten Stromkreuzungspunkt und der Phasenstrom IU fällt.

Im fünften Teilzyklus erfolgt in der Anstiegsphase eine Erhöhung des Momentanfeldwinkels von 240° auf 300°. In der Analysephase wird der Momentanfeldwinkel auf dem Wert des erreichten Endfeldwinkels von 300° konstant gehalten. Als aktive Phasen liegen hierbei W und U vor. Die an der Bildung des Stromauges beteiligten Ströme sind hierbei den Phasen U und W zuzuordnen, wobei im ersten Stromkreuzungspunkt der Phasenstrom IU steigt und der Phasenstrom IW fällt. Zur Schließung des Stromauges steigt der Phasenstrom IW im zweiten Stromkreuzungspunkt und der Phasenstrom IU fällt.

Im sechsten Teilzyklus erfolgt in der Anstiegsphase eine Erhöhung des Momentanfeldwinkels von 300° auf 360°. In der Analysephase wird der Momentanfeldwinkel auf dem Wert des erreichten Endfeldwinkels von 360°konstant gehalten. Als aktive Phasen liegen hierbei W sowie U vor. Die an der Bildung des Stromauges beteiligten Ströme sind hierbei den Phasen V und W zuzuordnen, wobei im ersten Stromkreuzungspunkt der Phasenstrom IV steigt und der Phasenstrom IW fällt. Zur Schließung des Stromauges steigt der Phasenstrom IW im zweiten Stromkreuzungspunkt und der Phasenstrom IV fällt.

Nach dem Abschluss der sechs Teilzyklen erreicht der Momentanfeidwinkei einen Wert von 360°, so dass ein Gesamtzyklus, welcher zugleich einer vollständigen Drehung des Rotors entspricht, abgeschlossen ist.

Erfindungsgemäß wird nun der aus sechs Teilzyklen bestehenden Gesamtzyklus bis zur Erreichung einer vorbestimmbaren Motordrehzahl des BLDC-Motors wiederholt durchgeführt. Die Anforderungen an einen stabilen Betrieb des Motors und eine damit verbunden Motordrehzahl können dabei je nach Anwendungsfall variieren.

### Verwendete Bezugszeichen

- 1: Rotor
- 2: Stator
- 3: Steuerungs- und Auswertungseinheit

## Patentansprüche

1. Verfahren zum Starten und Betreiben eines BLDC-Motors,
wobei der BLDC-Motor einen Rotor (1), einen Stator (2) sowie eine Steuerungs- und Auswertungseinheit (3) aufweist, wobei der Rotor (1) Erreger-magneten und der Stator (2) mindestens drei Statorspulen aufweist, wobei jede der mindestens drei Statorspulen mit jeweils einem Phasenstrom be-aufschlagbar ist und wobei mittels der Statorspulen ein drehendes Stator-magnetfeld erzeugbar ist,
aufweisend die folgenden Verfahrensschritte:
a) Durchführung einer Initialisierungsphase,
wobei das Definieren einer Startzeit, das Definieren eines initialen Startfeldwinkels des Statormagnetfelds und das Definieren einer Winkelanstiegsgeschwindigkeit erfolgt,
b) Durchführung eines Teilzyklus, hierbei
b1) Durchführung einer Anstiegsphase,
wobei die Erhöhung eines Momentanfeldwinkels mit der Winkelanstiegsgeschwindigkeit bis zum Erreichen eines Endfeldwinkels, welcher einen Startfeldwinkel um 60° übersteigt, erfolgt,
wobei die Erhöhung des Momentanfeldwinkels durch eine Veränderung einer Spannungsbeaufschlagung der Statorspulen erfolgt,
wobei der Startfeldwinkel bei einer erstmaligen Durchführung der Anstiegsphase dem initialen Startfeldwinkel und bei wiederholter Durchführung einem Endfeldwinkel einer vorhergehenden Anstiegsphase entspricht,
b2) Durchführung einer Analysephase,
wobei eine Konstanthaltung des Momentanfeldwinkels durch eine Konstan thaltung der Spannungsbeaufschlagung der Statorspulen erfolgt,
wobei eine fortlaufende Erfassung einer Stromdifferenz zwischen zwei Phasenströmen gleicher Fließrichtung erfolgt,
wobei eine Auswertung der erfassten Stromdifferenz auf ein Vorliegen eines Stromauges mittels der Steuerungs- und Auswertungseinheit erfolgt,
wobei sich das Stromauge zwischen dem Zeitpunkt eines ersten Auftretens einer Stromdifferenz von 0 zwischen den beiden Phasenströmen gleicher Fließrichtung und dem Zeitpunkt eines zweiten Auftretens einer Stromdifferenz von 0 zwischen den beiden Phasenströmen gleicher Fließrichtung ausbildet,
wobei bei Detektierung eines Stromauges eine sofortige Kommutierung erfolgt, oder wobei ohne Detektierung eines Stromauges eine Kommutierung nach Ablauf eines vorbestimmbaren Zeitintervalls erfolgt,
wobei nach Durchführung der Kommutierung eine Beendigung der Analysephase erfolgt,
c) Wiederholte Durchführung des Teilzyklus,
wobei der Teilzyklus so oft wiederholt wird, bis der Endfeldwinkel auf einen Wert von 360°angestiegen ist,
wobei die Teilzyklen zusammen einen Gesamtzyklus ausbilden,
d) Wiederholte Durchführung des Gesamtzyklus.

2. BLDC-Motor,
aufweisend einen Rotor (1), einen Stator (2) sowie eine Steuerungs- und Auswertungseinheit (3), wobei der Rotor (1) Permanentmagneten und der Stator (2) mindestens drei Statorspulen aufweist, wobei jede der mindestens drei Statorspulen mit jeweils einem Phasenstrom beaufschlagbar ist und
wobei mittels der Statorspulen ein drehendes Statormagnetfeld erzeugbar ist, wobei mittels der Steuerungs- und Auswertungseinheit und der drei Statorspulen eine Initialisierungsphase durchführbar ist,
wobei in der Initialisierungsphase das Definieren einer Startzeit, das Defini eren eines initialen Startfeldwinkels des Statormagnetfelds und das Definieren einer Winkelanstiegsgeschwindigkeit erfolgt,
wobei mittels der Steuerungs- und Auswertungseinheit sowie mittels der drei Statorspulen ein Teilzyklus durchführbar ist, welcher eine Anstiegsphase und eine Analysephase aufweist,
wobei in der Anstiegsphase die Erhöhung eines Momentanfeldwinkels mit der Winkelanstiegsgeschwindigkeit bis zum Erreichen eines Endfeldwinkels, welcher einen Startfeldwinkel um 60° übersteigt, durchführbar ist,
und die Erhöhung des Momentanfeldwinkels durch eine Veränderung einer Spannungsbeaufschlagung der Statorspulen bewirkbar ist,
und der Startfeldwinkel bei einer erstmaligen Durchführung der Anstiegsphase dem initialen Startfeldwinkel und bei wiederholter Durchführung einem Endfeldwinkel einer vorhergehenden Anstiegsphase entspricht,
wobei in der Analysephase eine Konstanthaltung des Momentanfeldwinkels durch eine Konstanthaltung der Spannungsbeaufschlagung der Statorspulen durchführbar ist, und eine fortlaufende Erfassung einer Stromdifferenz zwischen zwei Phasenströmen gleicher Fließrichtung durchführbar ist,
und eine Auswertung der erfassten Stromdifferenz auf ein Vorliegen eines Stromauges mittels der Steuerungs- und Auswertungseinheit erfolgt,
wobei sich das Stromauge zwischen dem Zeitpunkt eines ersten Auftretens einer Stromdifferenz von 0 zwischen den beiden Phasenströmen gleicher Fließrichtung und dem Zeitpunkt eines zweiten Auftretens einer Stromdifferenz von 0 zwischen den beiden Phasenströmen gleicher Fließrichtung ausbildet,
wobei bei Detektierung eines Stromauges eine sofortige Kommutierung erfolgt, oder wobei ohne Detektierung eines Stromauges eine Kommutierung nach Ablauf eines vorbestimmbaren Zeitintervalls erfolgt,
wobei nach Durchführung der Kommutierung die Beendigung der Analysephase erfolgt,
wobei der Teilzyklus so oft wiederholbar ist, bis der Endfeldwinkel auf einen Wert von 360° angestiegen ist und wobei bei einem Anstieg des Endfeldwinkels auf 360° ein Gesamtzyklus vorliegt,
wobei der Gesamtzyklus wiederholt durchführbar ist.

## Claims

1. A method for starting and operating a BLDC motor,
wherein the BLDC motor has a rotor (1), a stator (2) and a control and evaluation unit (3), wherein the rotor (1) has exciter magnets, and the stator (2) has at least three stator coils, wherein always one phase current can be applied to each of the at least three stator coils, and wherein a rotating stator magnetic field can be generated by means of the stator coils,
comprising the following procedural steps:
a) carrying out an initialisation phase,
wherein a start time, an initial starting field angle of the stator magnetic field and an angle rising rate are defined,
b) carrying out a partial cycle, including
b1) carrying out a rising phase,
wherein a current field angle is increased until a final field angle is reached which exceeds a starting field angle by 60°,
wherein the current field angle is increased by a change in the voltage application to the stator coils,
wherein the starting field angle corresponds to the initial starting field angle when the rising phase is carried out for the first rime and to a final field angle of a previous rising phase when it is carried out repeatedly,
b2) carrying out an analysis phase,
wherein the current field angle is kept constant on account of the voltage application to the stator coils being kept constant,
wherein a difference in current between two phase currents of the same direction of flow is continuously recorded,
wherein the control and evaluation unit analyses the recorded difference in current for the presence of a current eye,
wherein the current eye is formed between the time of a first occurrence of a current difference of 0 between the two phase currents of the same direction of flow and the time of a second occurrence of a current difference of 0 between the two phase currents of the same direction of flow,
wherein immediate commutation takes place when a current eye is detected,
or wherein, without detection of a current eye, commutation takes place after a pre-definable time interval has elapsed:
wherein the analysis phase is terminated after commutation has been carried out,
c) repeatedly carrying out the partial cycle,
wherein the partial cycle is repeated until the final field angle has increased to a value of 360°,
wherein the partial cycles together form a total cycle,
d) repeatedly carrying out the total cycle.

2. A BLDC-Motor,
comprising a rotor (1), a stator (2) and a control and evaluation unit (3), wherein the rotor (1) has exciter magnets, and the stator (2) has at least three stator coils, wherein always one phase current can be applied to each of the at least three stator coils, and wherein a rotating stator magnetic field can be generated by means of the stator coils,
wherein an initialisation phase can be carried out by means of the control and evaluation unit and the three stator coils;
wherein a start time, an initial starting field angle of the stator magnetic field and an angle rising rate are defined in the initialisation phase,
wherein by means of the evaluation unit and by means of the at least three stator coils a partial cycle, having a rising phase and an analysis phase, can be carried out,
wherein in the rising phase a current field angle can be increased until a final field angle is reached which exceeds a starting field angle by 60°,
and the current field angle can be increased by a change in a voltage application to the stator coils,
and the starting field angle corresponds to the initial starting field angle when the rising phase is carried out for the first time and to a final field angle of a previous rising phase when it is carried out repeatedly,
wherein in the analysis phase the current field angle is kept constant on account of the voltage application to the stator coils being kept constant, and a difference in current between two phase currents of the same direction of flow can be recorded continuously,
and the control and evaluation unit analyses the recorded difference in current for the presence of a current eye,
wherein the current eye is formed between the time of a first occurrence of a current difference of 0 between the two phase currents of the same direction of flow and the time of a second occurrence of a current difference of 0 between the two phase currents of the same direction of flow,
wherein immediate commutation takes place when a current eye is detected, or wherein, without detection of a current eye, commutation takes place after a predefinable time interval has elapsed,
wherein the analysis phase is terminated after commutation has been carried out,
wherein the partial cycle can be repeated until the final field angle has increased to a value of 360°, and wherein a total cycle is achieved when the final field angle increases to 360°,
wherein the total cycle can be repeatedly₋ carried out.

## Revendications

1. Procédé de démarrage et de fonctionnement d'un moteur sans balais
dans lequel le moteur sans balais présente un rotor (1), un stator (2) et une unité de commande et d'évaluation (3), dans lequel le rotor (1) présente des aimants d'excitation et le stator (2) présente au moins trois bobines de stator, dans lequel chacune des au moins trois bobines de stator peut être alimentée avec un courant de phase respectif et dans lequel un champ magnétique de stator rotatif peut être généré au moyen des bobines de stator,
comprenant les suivantes étapes de procédé:
a) l'exécution d'une phase d'initialisation,
dans laquelle la définition d'un temps de démarrage, la définition d'un angle de champ de départ initial du champ magnétique de stator et la définition d'un taux d'élévation de l'angle sont effectuées,
b) l'exécution d'un sous-cycle, ici
b1) l'exécution d'une phase de montée,
dans laquelle la montée d'un angle de champ momentané a lieu à un taux d'élévation de l'angle jusqu'à l'obtention d'un angle de champ final qui excède un angle de champ de départ de 60°,
dans laquelle l'angle de champ momentané est augmenté par l'application d'une tension modifiée aux bobines du stator,
dans laquelle l'angle de champ initial correspond à l'angle de champ de départ initial lorsque la phase de montée est effectuée pour la première fois et à un angle de champ final de l'une des phases de montée précédentes lorsque la phase de montée est effectuée de manière répétée,
b2) l'exécution d'une phase d'analyse,
dans laquelle l'angle de champ momentané est maintenu constant par l'application d'une tension constante aux bobines du stator,
dans laquelle une différence de courant entre deux courants de phase ayant le même sens d'écoulement est détectée en permanence,
dans laquelle une évaluation de la différence de courant détectée est effectuée pour vérifier la présence d'un oeil de courant au moyen de l'unité de commande et d'évaluation,
dans laquelle l'œil de courant se forme entre le moment d'une première occurrence d'une différence de courant de 0 entre les deux courants de phase de la même direction d'écoulement et le moment d'une seconde occurrence d'une différence de courant de 0 entre les deux courants de phase de la même direction d'écoulement,
dans laquelle une commutation immédiate a lieu lorsqu'un œil de courant est détecté,
ou dans laquelle, sans détection d'un œil de courant, la commutation a lieu après l'expiration d'un intervalle de temps prédéterminable,
dans laquelle la phase d'analyse se termine après l'exécution de la commutation,
c) l'exécution répétée du sous-cycle,
dans laquelle le sous-cycle est répété jusqu'à ce que l'angle de champ final ait atteint une valeur de 360°,
Dans laquelle les sous-cycles forment ensemble un cycle complet,
d) l'exécution répétée du cycle complet.

2. Moteur sans balais,
présentant un rotor (1), un stator (2) et une unité de commande et d'évaluation (3), dans lequel le rotor (1) présente des aimants permanents et le stator (2) présente au moins trois bobines de stator, dans lequel chacune des au moins trois bobines de stator peut être alimentée avec un courant de phase respectif et dans lequel un champ magnétique de stator rotatif peut être généré au moyen des bobines de stator, dans lequel une phase d'initialisation peut être effectuée au moyen des unités de commande et d'évaluation
et des trois bobines de stator,
dans lequel la définition d'un temps de démarrage, la définition d'un angle de champ de départ initial du champ magnétique de stator et la définition d'un taux d'élévation de l'angle sont effectuées pendant cette phase d'initialisation,
dans lequel un sous-cycle peut être effectué au moyen des unités de commande et d'évaluation ainsi qu'au moyen des trois bobines de stator, lequel présente une phase de montée et une phase d'analyse,
dans lequel la montée d'un angle de champ momentané peut être effectuée à un taux d'élévation de l'angle pendant la phase ascendante jusqu'à l'obtention d'un angle de champ final qui excède un angle de champ de départ de 60°,
et l'angle de champ momentané est augmenté par l'application d'une tension modifiée aux bobines du stator,
et l'angle de champ initial correspond à l'angle de champ de départ initial lorsque la phase de montée est effectuée pour la première fois et à un angle de champ final de l'une des phases de montée précédentes lorsque la phase de montée est effectuée de manière répétée,
dans lequel l'angle de champ momentané peut être maintenu constant par l'application d'une tension constante aux bobines du stator pendant la phase d'analyse, et une différence de courant entre deux courants de phase ayant le même sens d'écoulement peut être détectée en permanence,
et une évaluation de la différence de courant détectée est effectuée pour vérifier la présence d'un oeil de courant au moyen de l'unité de commande et d'évaluation,
dans lequel l'œil de courant se forme entre le moment d'une première occurrence d'une différence de courant de 0 entre les deux courants de phase de la même direction d'écoulement et le moment d'une seconde occurrence d'une différence de courant de 0 entre les deux courants de phase de la même direction d'écoulement,
dans lequel une commutation immédiate a lieu lorsqu'un œil de courant est détecté,
ou dans lequel, sans détection d'un oeil de courant, la commutation a lieu après l'expiration d'un intervalle de temps prédéterminable,
dans lequel la phase d'analyse se termine après l'exécution de la commutation,
dans lequel le sous-cycle est répété jusqu'à ce que l'angle de champ final ait atteint une valeur de 360°, et un cycle complet se présente, si l'angle du champ final augmente jusqu'à 360°,
dans lequel ce cycle complet peut être effectué à maintes reprises.
